# EUROPEAN PATENT APPLICATION

(11) **EP 4 710 795 A1**
(43) Date of publication of application: **18.03.2026**
(21) Application number: 24802965.4
(22) Date of filing: 07.05.2024
(51) Int. Cl.: A24F 40/46

(54) **HEATING STRUCTURE AND AEROSOL GENERATING DEVICE**

(30) Priority: 09.05.2023 CN 202310519733; 09.05.2023 CN 202321108491 U; 09.05.2023 CN 202321108626 U; 09.05.2023 CN 202321119404 U; 09.05.2023 CN 202321119359 U; 09.05.2023 CN 202321108429 U; 09.05.2023 CN 202321119274 U
(71) Applicant: Smoore International Holdings Limited, Grand Cayman, KY1-1111 (KY)
(72) Inventor: ZHANG, Guo, Shenzhen, Guangdong 518102 (CN); MA, Lei, Shenzhen, Guangdong 518102 (CN); ZHANG, Xingfu, Shenzhen, Guangdong 518102 (CN); DU, Xianwu, Shenzhen, Guangdong 518102 (CN); ZHOU, Hongming, Shenzhen, Guangdong 518102 (CN); LI, Rihong, Shenzhen, Guangdong 518102 (CN); ZHANG, Xiaohua, Shenzhen, Guangdong 518102 (CN); HUANG, Pengfei, Shenzhen, Guangdong 518102 (CN)
(74) Representative: Winter, Brandl - Partnerschaft mbB
(86) International application number: PCT/CN2024/091476
(87) International publication number: WO 2024/230685

(57) **Abstract**

The present disclosure relates to a heating structure and an aerosol generating device. The heating structure includes a heating element that generates infrared light in a power-on state, and a tube body that allows the infrared light to penetrate through. The heating element is at least partially accommodated in the tube body, and a gap is formed between the heating element and the inner wall of the tube body. An included angle formed between the central axis of the heating element along the length direction of the heating element and the central axis of the tube body along the length direction of the tube body is less than or equal to 5°. Alternatively, a distance between the central axis of the heating element along the length direction of the heating element and the central axis of the tube body along the length direction of the tube body is less than or equal to 0.5 mm, to ensure good perpendicularity of the heating element and a relatively uniform gap between the heating element and the tube body, thereby avoiding excessively high local temperature around the heating structure, ensuring uniform heating of an aerosol generating substrate, avoiding charring of the aerosol generating substrate, ensuring the consistency of the vaping experience of the user, and providing a good consumer experience.

## Description

### TECHNICAL FIELD

The present disclosure relates to the technical field of heat-not-burning (HNB) atomization, in particular to a heating structure and an aerosol generating device.

### BACKGROUND

In the technical field of heat-not-burning (HNB) atomization, heating methods such as heating by a central heating element or by a peripheral heating element are employed generally. The common practice is that the heating element generates heat, and the heat is then directly transferred to an aerosol generating substrate through heat conduction. The substrate will generally be atomized within a temperature range of 350°C or less. This heating method has a disadvantage in that the heating element directly conducts the heat to the aerosol generating substrate. This requires that the operating temperature of the heating element not be too high; otherwise, it will cause the aerosol generating substrate to produce an unpleasant smell, thereby affecting the vaping experience.

In the related art, there is a heating structure generating thermal radiation for heating. A heating element of the heating structure is not in direct contact with the aerosol generating substrate. Instead, the heating element is accommodated in a tube body. The heating structure heats and activates an infrared radiation layer of the heating structure to radiate infrared light, and the infrared light penetrates through the tube body and heats the aerosol generating substrate. The operating temperature of the heating element of the heating structure may reach above 500°C, or even reach above 1000°C, which can greatly improve the efficiency of heating the aerosol generating substrate. However, due to the high precision of the inner wall of the tube body and the heating element, the positional relationship between the tube body and the heating element when installed inside the tube body will affect the local temperature field of the heating structure. This directly leads to uneven heating of the aerosol generating substrate. For example, local overheating may occur, causing local charring of the aerosol generating substrate, which is not conducive to the consumer experience.

### SUMMARY

The technical problem to be solved by the present disclosure is to provide a heating structure and an aerosol generating device.

The technical solution adopted by the present disclosure to solve the technical problem is that a heating structure is constructed. The heating structure includes a heating element that generates infrared light in a power-on state, and a tube body that allows the infrared light to penetrate through;
the heating element is at least partially accommodated in the tube body, and a gap is at least partially formed between the heating element and the inner wall of the tube body; an included angle (a) formed between the central axis of the heating element along the length direction of the heating element and the central axis of the tube body along the length direction of the tube body is less than or equal to 5°.

Preferably, a distance between the central axis of the heating element along the length direction of the heating element and the central axis of the tube body along the length direction of the tube body is less than or equal to 0.5 mm.

Preferably, the heating structure further includes a support member; the support member is at least partially located within the tube body;
the heating element includes a heating portion and an electrode portion;
the tube body includes a closed end and an open end; one end of the electrode portion is connected to the heating portion, and the other end of the electrode portion extends out from the open end; and
the electrode portion is at least partially located within the tube body and is positioned on the support member, and the support member is radially and/or axially limited by the tube body.

Preferably, the tube body and the support member are coaxially provided, or a spacing distance between the central axis of the tube body along the length direction of the tube body and the central axis of the support member along the length direction of the support member is less than or equal to a preset spacing.

Preferably, the tube body includes a pointed top structure and a tube main body that are axially connected; the pointed top structure forms the closed end, and the open end of the tube body is located at one end of the tube main body away from the pointed top structure; and
the heating element has, in the axial direction of the heating element, a first end facing the pointed top structure and a second end facing the open end; the first end is in contact and cooperates with the inner wall of the pointed top structure, and the part of the heating element except the first end is spaced apart from the inner wall of the tube main body.

Preferably, the heating element has a spiral structure and includes a spiral segment and a top end provided at one end of the spiral segment; and the top end is located within the pointed top structure and is in contact and cooperates with the inner wall of the pointed top structure.

Preferably, the top end of the heating element is annular, and two opposite side surfaces of the annular top end abut against the inner wall surface of the pointed top structure.

Preferably, the radial dimension of the top end of the heating element gradually decreases in the direction away from the open end of the tube body, and the top end abuts against the uppermost portion of the pointed top structure.

Preferably, the tube body includes a pointed top structure and a tube main body that are axially connected; the pointed top structure forms the closed end, and the open end of the tube body is located at one end of the tube main body away from the pointed top structure; and
the heating element has, in the axial direction of the heating element, a first end facing the pointed top structure and a second end facing the open end; the first end is spaced apart from the inner wall of the pointed top structure, and the heating element is spaced apart from the inner wall of the tube main body.

Preferably, the heating portion includes a main body portion and a first connection portion and a second connection portion that are connected to the main body portion; the first connection portion and the second connection portion are connected to one end of the main body portion facing the open end; and
the electrode portion includes a first electrode and a second electrode, and the first electrode and the second electrode are connected to the first connection portion and the second connection portion, respectively.

Preferably, the first connection portion and the second connection portion are provided on two sides of the central axis of the heating element along the length direction of the heating element, respectively, and parts of the first connection portion and the second connection portion that face the electrode portion are parallel to each other.

Preferably, the width value of a gap (w) between opposite surfaces of the first connection portion and the second connection portion is 0.2 mm-1.5 mm.

Preferably, the first connection portion and the second connection portion are provided on two sides of the central axis of the heating element along the length direction of the heating element, respectively; and at least one of the first connection portion and the second connection portion includes a bending portion away from the central axis of the heating element along the length direction of the heating element.

Preferably, the first connection portion and the second connection portion are provided on two sides of the axis of the heating element, respectively, and are symmetrically provided about the axis of the heating element.

Preferably, the heating element has a spiral structure; the main body portion is a spiral segment, the first connection portion and the second connection portion are linear segments connected to one end of the spiral segment, and the linear segments are at least partially bent close to the spiral segment.

Preferably, the heating element includes a heating portion and an electrode portion that are connected; the heating portion includes a heating base and an infrared radiation layer covering the heating base.

Preferably, the included angle formed between the central axis of the heating element along the length direction of the heating element and the central axis of the tube body along the length direction of the tube body is less than or equal to 2°.

Preferably, positioning grooves are formed on the support member; the electrode portion is adapted to and fixed within the positioning grooves.

Preferably, limiting portions are further provided between the support member and the heating element; the limiting portion is adhered to the upper surface of the support member, is snapped into the positioning groove, or covers the top of the positioning groove.

Preferably, the limiting portion is a welding point formed between the heating element and the electrode portion.

Preferably, the tube body is provided with a reinforcing structure at least in a lower portion close to the bottom end of the tube body.

Preferably, the tube body includes an outer tube body and an inner tube body, and the inner tube body is provided inside the outer tube body; the heating element is provided inside the inner tube body.

Preferably, the heating structure further includes a temperature resistance coefficient (TCR) temperature measuring element, where the TCR temperature measuring element is provided in the tube body and spaced apart from the heating element.

Preferably, the tube body includes a wall surface that allows the infrared light to penetrate through and is in contact with an aerosol generating substrate; the tube body further includes a protrusion structure; the protrusion structure is provided on at least a part of the wall surface of the tube body and is configured to reduce a contact area between the wall surface and the aerosol generating substrate; the protrusion structure has infrared light-transmitting characteristics.

Preferably, the tube body includes an open end and a closed end opposite to the open end; the heating element extends into the tube body via the open end, and a reflective structure configured to reflect the infrared light is formed on the closed end.

The present disclosure further provides a heating structure, including a heating element that generates infrared light in a power-on state, and a tube body that allows the infrared light to penetrate through.

The heating element is at least partially accommodated in the tube body, and a gap is at least partially formed between the heating element and the inner wall of the tube body; a distance between the central axis of the heating element along the length direction of the heating element and the central axis of the tube body along the length direction of the tube body is less than or equal to 0.5 mm.

In the present disclosure, an aerosol generating device is further constructed. The aerosol generating device includes the heating structure described in any one of the foregoing aspects.

Preferably, the aerosol generating device further includes an extractor and a filtering structure;
the extractor includes an accommodating tube configured to accommodate at least a part of an aerosol generating substrate, and the accommodating tube has an insertion port configured to insert the aerosol generating substrate and an air inlet end opposite to the insertion port; the heating structure is detachably connected to the extractor and defines, together with the extractor, an air inlet channel communicated with the accommodating tube;
the filtering structure is detachably provided in the air inlet channel and cooperates with the air inlet end to filter airflow passing between the air inlet channel and the accommodating tube.

The present disclosure at least has the following beneficial effects. The included angle formed between the central axis of the heating element along the length direction of the heating element and the central axis of the tube body along the length direction of the tube body is less than or equal to 5°, or the distance between the central axis of the heating element along the length direction of the heating element and the central axis of the tube body along the length direction of the tube body is less than or equal to 0.5 mm, to ensure good perpendicularity of the heating element and a relatively uniform gap between the heating element and the tube body, thereby avoiding excessively high local temperature around the heating structure, ensuring uniform heating of the aerosol generating substrate, avoiding charring of the aerosol generating substrate, ensuring the consistency of the vaping experience of the consumer, and providing a good consumer experience.

### BRIEF DESCRIPTION OF THE DRAWINGS

The present disclosure will be further described below in conjunction with the accompanying drawings and embodiments, in which:
FIG. 1 is a schematic longitudinal cross-sectional view of an aerosol generating device in a first embodiment of the present disclosure;
FIG. 2 is a schematic longitudinal cross-sectional view of a heating structure in a first embodiment of the present disclosure;
FIG. 3 is an enlarged schematic structural diagram of a part A of FIG. 2;
FIG. 4 is an enlarged schematic structural diagram of a part B of FIG. 2;
FIG. 5 is a schematic sectional structural diagram along C-C of FIG. 2;
FIG. 6 is an enlarged schematic structural diagram of a part D of FIG. 5;
FIG. 7 is a schematic transverse cross-sectional view of one axial position of a heating structure in a second embodiment of the present disclosure;
FIG. 8 is a schematic transverse cross-sectional view of one axial position of a heating structure in a third embodiment of the present disclosure;
FIG. 9 is a schematic transverse cross-sectional view of a heating portion of a heating element of a heating structure in a first embodiment of the present disclosure;
FIG. 10 is a schematic longitudinal cross-sectional view of a heating structure provided with a reinforcing structure in some embodiments of the present disclosure;
FIG. 11 is a schematic longitudinal cross-sectional view of a heating structure provided with a reinforcing structure in other embodiments of the present disclosure;
FIG. 12 is a schematic longitudinal cross-sectional view of a heating structure provided with a reinforcing structure in other embodiments of the present disclosure;
FIG. 13 is a schematic longitudinal cross-sectional view of a heating structure provided with a reinforcing structure in other embodiments of the present disclosure;
FIG. 14 is a schematic longitudinal cross-sectional view of a heating structure provided with an inner tube body and an outer tube body in some embodiments of the present disclosure;
FIG. 15 is a schematic longitudinal cross-sectional view of a heating structure provided with a TCR temperature measuring element in some embodiments of the present disclosure;
FIG. 16 is a schematic structural diagram of a TCR temperature measuring element in some embodiments of the present disclosure;
FIG. 17 is a schematic structural diagram of a TCR temperature measuring element in other embodiments of the present disclosure;
FIG. 18 is a schematic longitudinal cross-sectional view of a heating structure provided with a protrusion structure in some embodiments of the present disclosure;
FIG. 19 is a schematic longitudinal cross-sectional view of a heating structure provided with a reflective structure in some embodiments of the present disclosure;
FIG. 20 is a schematic longitudinal cross-sectional view of a heating structure provided with a reflective structure in other embodiments of the present disclosure;
FIG. 21 is a schematic longitudinal cross-sectional view of an aerosol generating device provided with a filtering structure in some embodiments of the present disclosure;
FIG. 22 is a partially exploded schematic structural diagram of FIG. 21; and
FIG. 23 is a schematic longitudinal cross-sectional view of an aerosol generating device provided with a filtering structure in other embodiments of the present disclosure.

### DETAILED DESCRIPTION

To provide a clearer understanding of the technical features, objectives, and effects of the present disclosure, specific implementations of the present disclosure are described with reference to the accompanying drawings.

It should be further noted that, unless otherwise clearly specified and limited, terms such as "connected", "fixed", and "provided" should be understood in a generalized manner, such as fixedly connected, detachably connected, integrally connected, directly connected, indirectly connected through an intermediate medium, and communicated between two elements or the interaction relationship between two elements. The terms "first" and "second" are merely for facilitating the description of the technical solution, and should not be interpreted as indicating or implying relative importance or implicitly indicating the number of the technical features indicated. Thus, the features defined with "first" and "second" may explicitly or implicitly include one or more of such features. The specific meanings of the above-mentioned terms in the present disclosure may be understood by a person skilled in the art according to specific circumstances.

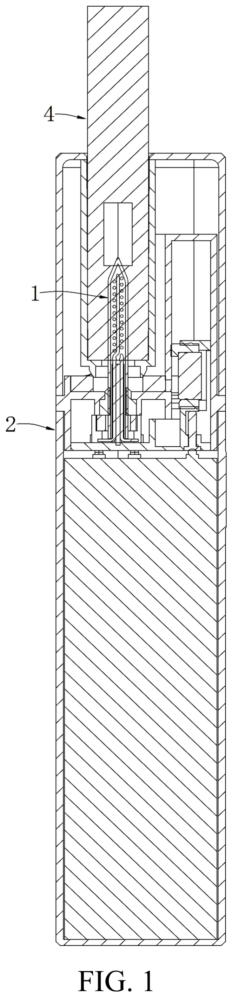

FIG. 1 shows an aerosol generating device in an embodiment of the present disclosure, which includes a heating structure 1 in any embodiment of the present disclosure, and a power supply assembly 2. The heating structure 1 is detachably installed in a shell of the power supply assembly 2, and may be mechanically and/or electrically connected to a power supply in the power supply assembly 2. Certainly, the heating structure 1 may further be fixed in the shell, and does not need to be disassembled. The power supply assembly 2 is configured to supply power to the heating structure 1. The heating structure 1 may be partially inserted into an aerosol generating substrate 4. Specifically, the heating structure 1 may be partially inserted into a substrate segment of the aerosol generating substrate 4, and generates thermal radiation in a power-on state to heat the substrate segment of the aerosol generating substrate 4 so that the aerosol generating substrate 4 is atomized to generate aerosol. The thermal radiation may be thermal infrared radiation. The aerosol generating substrate 4 may be cylindrical. Specifically, the aerosol generating substrate may be a filamentous, sheet-like, or integrally formed solid material made from leaves and/or stems of plants (for example, tobacco), and aroma components may be further added to the solid material. In the power-on state, a heating element 11 may quickly heat up to about 1000°C within 1-3 s, the surface temperature of a tube body 12 may be controlled below 350°C, and the overall atomization temperature of the aerosol generating substrate 4 is controlled at 300°C-350°C, thereby achieving precise infrared light atomization of the aerosol generating substrate 4 primarily within bands of 2 µm-4.75 um (including endpoint values and any value between the endpoint values) and 8 µm-11 µm (including endpoint values and any value between the endpoint values).

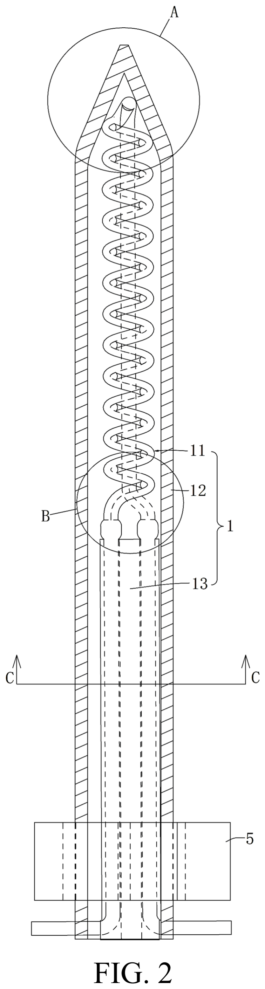

As shown in FIG. 2 to FIG. 6, a heating structure 1 in a first embodiment of the present disclosure includes a heating element 11 that generates infrared light in a power-on state, and a tube body 12 that allows the infrared light to penetrate through.

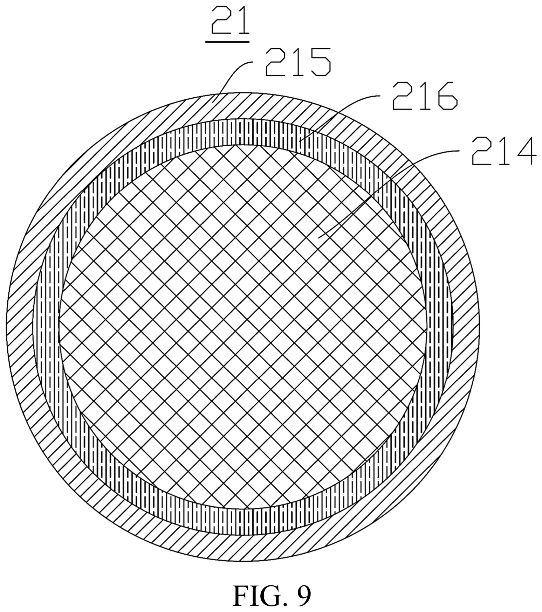

As shown in FIG. 9, in this embodiment, the heating element 11 includes a heating portion 21 and an electrode portion 22 that are connected. The heating portion 21 and the electrode portion 22 may be connected along the axial direction of the tube body 12. The heating portion 21 includes a heating base 214 and an infrared radiation layer 215 covering the heating base 214. The heating base 214 includes a metal base having high-temperature oxidation resistance, such as a metal wire, and may be a metal material having good high-temperature oxidation resistance, high stability, and resistance to deformation, such as a nickel-chromium alloy base (for example, a nickel-chromium alloy wire) or an iron-chromium-aluminum alloy base (for example, an iron-chromium-aluminum alloy wire). In some embodiments, the diameter of the metal base may be 0.15 mm-0.8 mm (including 0.15 mm, 0.8 mm, and any value between 0.15 mm and 0.8 mm).

The heating portion 21 further includes an anti-oxidation layer 216, and the anti-oxidation layer 216 is formed between the heating base 214 and the infrared radiation layer 215. Specifically, the anti-oxidation layer 216 may be an oxide film. A layer of dense oxide film is generated on the surface of the heating base 214 by performing high-temperature heat treatment. The oxide film forms the anti-oxidation layer 216. Certainly, it may be understood that, in other embodiments, the anti-oxidation layer 216 is not limited to including the oxide film formed by the anti-oxidation layer 216. In other embodiments, the anti-oxidation layer 216 may be an anti-oxidation coating coated on the outer surface of the heating base 214. The thickness of the anti-oxidation layer 216 may be selected to be in a range of 1 um-150 um (including endpoint values and any value between the endpoint values).

The infrared radiation layer 215 may be an infrared layer. The infrared layer may be an infrared layer-generating base that is formed, under high-temperature heat treatment, on one side of the anti-oxidation layer 216 away from the heating base 214. Specifically, the infrared layer-generating base may be a silicon carbide base, a spinel base, or a composite base thereof. Certainly, it may be understood that, in other embodiments, the infrared radiation layer 215 is not limited to the infrared layer. In other embodiments, the infrared radiation layer 215 may be a composite infrared layer, such as a glass powder composite infrared layer. Specifically, the infrared layer may be formed on the side of the anti-oxidation layer 216 away from the heating base 214 through dipping, spraying, brushing, and other methods.

A part of the heating element 11 is accommodated in the tube body 12, and the other part of the heating element 11 extends out of the tube body 12 and is connected to the power supply. A gap is formed between the heating element 11 and the inner wall of the tube body 12. More specifically, a radial gap is formed between the heating element 11 and the inner wall of the tube body 12. The radial gap may be filled with air. The thickness of the infrared radiation layer 215 may be 10 um-300 um (including endpoint values and any value between the endpoint values). When the thickness of the infrared radiation layer 215 is 10 um-300 um, the infrared light effect of the infrared radiation layer 215 is good, resulting in good atomization efficiency and atomization taste of the aerosol generating substrate 4. A binding layer is further provided between the anti-oxidation layer 216 and the infrared radiation layer 215. The binding layer is configured to prevent local breakdown of the heating portion 21, and further improves a binding force between the anti-oxidation layer 216 and the infrared radiation layer 215.

The heating element 11 generates infrared light in the power-on state, and the tube body 12 may allow the infrared light to penetrate through to reach the aerosol generating substrate 4, thereby facilitating the heating of the aerosol generating substrate 4 through the heat radiated from the heating element 11. A particular radial gap is reserved between the inner wall of the tube body 12 and the heating element 11 to ensure that the surface temperature of the tube body 12 is not excessively high, thereby avoiding overheating of the substrate or unpleasant smell of the solid material.

The tube body 12 may be a quartz glass tube or other window material that allows light waves to penetrate through, such as infrared-transparent glass, transparent ceramic, and diamond. The thickness of the tube wall of the tube body 12 may be 0.2 mm-0.5 mm (including endpoint values and any value between the endpoint values).

The heating element 11 is longitudinally provided, and the maximum radial dimension of the heating element 11 may be 0.6 mm-2.5 mm (including endpoint values and any value between the endpoint values). The outer diameter of the tube body 12 may be 1.6 mm-3.5 mm (including endpoint values and any value between the endpoint values). That is, the radial dimensions of the heating element 11 and the tube body 12 are very small, and the heating element 11 and the tube body 12 are in a high-temperature state during operation. Consequently, in an operating state or in other cases, the heating element 11 has a risk of being inclined to one side due to deformation of the heating element 11 or an external force. In addition, in a mass production and assembly process, due to production or assembly errors, the heating element is easily inclined or even adhered to the tube wall. After the heating element 11 is inclined, the entire temperature field of the heating structure 1 changes, and the temperature of the tube body 12 close to an inclined side of the heating element 11 is higher than the temperature of an opposite side of the tube body 12. However, once an inclined angle exceeds a limit, the heating element 11 is directly adhered to the inner wall of the tube body 12, and the heat is directly conducted to the tube body 12. Consequently, the temperature of the part of the tube body 12 that is directly adhered to the heating element 11 is much greater than the temperature of the opposite side of the tube body 12. A temperature difference between two sides at the same height may reach above 50°C, which exceeds a limit (usually within 10°C). This will directly cause uneven heating of the aerosol generating substrate 4, thereby adversely affecting the consumer experience. The present disclosure aims to limit the inclined angle of the heating element 11 to ensure relatively good perpendicularity of the heating element 11, thereby ensuring that a temperature difference around the heating structure 1 does not exceed a limit. The limit of the temperature difference is usually within 10°C, which may ensure uniform heating of the aerosol generating substrate 4. The perpendicularity herein refers to the degree of perpendicularity between the central axis of the heating element 11 along the length direction of the heating element 11 and a cross section of the tube body 12. It should be noted that, in some embodiments, the "length direction" may refer to the axial extension direction of the tube body 12. Alternatively, the heating element 11 is longitudinally provided, and the "length direction" may refer to a longitudinal extension direction of the heating element 11.

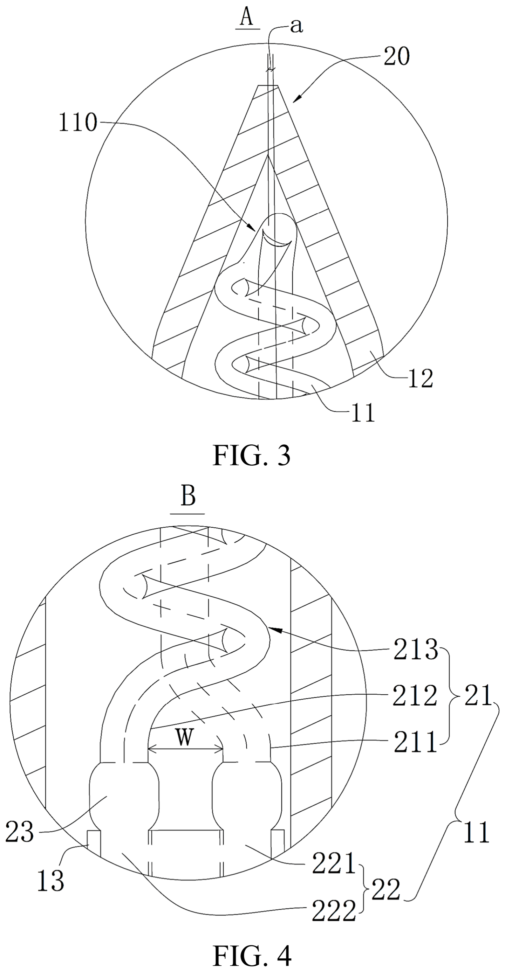

As shown in FIG. 3, the heating element 11 is inclined at an angle relative to the tube body 12. That is, an included angle a is formed between the central axis of the heating element 11 along the length direction of the heating element 11 and the central axis of the tube body 12 along the length direction of the tube body 12, and the included angle a is less than or equal to 5°. Alternatively, a distance between the central axis of the heating element 11 along the length direction of the heating element 11 and the central axis of the tube body 12 along the length direction of the tube body 12 may be less than or equal to 0.5 mm. Alternatively, the included angle a formed between the central axis of the heating element 11 along the length direction of the heating element 11 and the central axis of the tube body 12 along the length direction of the tube body 12 is less than or equal to 5°, and the distance between the central axis of the heating element 11 along the length direction of the heating element 11 and the central axis of the tube body 12 along the length direction of the tube body 12 is less than or equal to 0.5 mm.

In particular, the included angle a formed between the central axis of the heating element 11 along the length direction of the heating element 11 and the central axis of the tube body 12 along the length direction of the tube body 12 is less than or equal to 5°, and/or the distance between the central axis of the heating element 11 along the length direction of the heating element 11 and the central axis of the tube body 12 along the length direction of the tube body 12 is less than or equal to 0.5 mm, to ensure good perpendicularity of the heating element 11 and a relatively uniform gap between the heating element 11 and the tube body 12. Thus, a peripheral temperature difference of the heating structure 1 at the same axial position can be controlled within a suitable range, thereby avoiding excessively high local temperature around the heating structure 1, ensuring uniform heating of the aerosol generating substrate 4, avoiding charring of the aerosol generating substrate 4, ensuring the consistency of the vaping experience of the user, and providing a good consumer experience.

Thus, the minimum width value of the gap formed between the heating element 11 and the inner wall of the tube body 12 may be 0.05 mm-0.5 mm. It should be noted that, the minimum width value of the gap formed between the heating element 11 and the inner wall of the tube body 12 may be 0.05 mm, 0.5 mm, or any value between 0.05 mm and 0.5 mm. It is ensured that when the operating temperature of the heating element 11 is 500-1200°C, a long-time heating temperature of the outer surface of the tube body 12 does not exceed 370°C, and most of the time, the temperature of the outer surface of the tube body 12 does not exceed 350°C. In some embodiments, the instantaneous temperature of the tube body 12 may reach 550°C, but for a very short duration. The surface of the heating element 11 is not necessarily of a uniform and regular shape. When the surface of the heating element 11 is not of a uniform and regular shape, width values of gaps formed between points on the heating element 11 and the inner wall of the tube body 12 are not all equal. Therefore, the minimum width value of the gap formed between the heating element 11 and the inner wall of the tube body 12 may be understood as a minimum value of the width values of the gaps formed between the points on the heating element 11 and the inner wall of the tube body 12.

Further, in this embodiment, the heating structure 1 further includes a support member 13. The support member 13 is at least partially located within the tube body 12. The heating element 11 includes a heating portion 21 and an electrode portion 22. The tube body 12 includes a closed end and an open end. One end of the electrode portion 22 is connected to the heating portion 21, and the other end of the electrode portion 22 extends out from the open end of the tube body 12. The electrode portion 22 is at least partially located within the tube body 12 and is positioned on the support member 13, and the support member 13 is radially and/or axially limited by the tube body 12, for limiting the position of the heating element 11 in the tube body 12.

Specifically, the support member 13 may be a cylinder made of ceramics or other high-temperature-resistant insulation materials, or may have another shape except a cylinder. The support member 13 may be entirely located within the tube body 12, or only a part of the support member 13 is located within the tube body 12, and the other part extends out of the tube body 12. The tube body 12 includes a closed end and an open end. A part of the electrode portion 22 is located within the tube body 12 and is positioned on the support member 13, and the other part of the electrode portion 22 extends out of the open end of the tube body 12 and is connected to the power supply. The heating portion 21 is entirely located within the tube body 12 and is axially connected to the electrode portion 22. Certainly, in other embodiments, the electrode portion 22 may further be entirely located within the tube body 12. During assembly, the support member 13 may be assembled to be coaxially provided with the central axis of the tube body 12, which is conducive to reducing the inclined angle of the heating portion 21 when the heating portion 21 is inclined subsequently.

In this way, the heating element 11 is supported and positioned on the support member 13 through the electrode portion 22, thereby providing stable supporting and positioning for a lower end of the heating element 11. In addition, the heating element 11 also has particular stiffness, and cooperates with the support of the support member 13 to achieve relatively good overall stability. Thus, it can be ensured that the heating element 11 always has relatively good perpendicularity, the inclined angle a of the heating element 11 is less than or equal to 5°, or the distance between the central axis of the heating element 11 along the length direction of the heating element 11 and the central axis of the tube body 12 along the length direction of the tube body 12 is less than or equal to 0.5 mm to ensure that the temperature difference around the heating structure 1 does not exceed a limit, thereby ensuring uniform heating of the aerosol generating substrate 4.

More preferably, in other embodiments, the included angle a formed between the central axis of the heating element 11 along the length direction of the heating element 11 and the central axis of the tube body 12 along the length direction of the tube body 12 is less than or equal to 2°.

Further, in this embodiment, the tube body 12 and the support member 13 are coaxially provided. Alternatively, when the tube body 12 and the support member 13 are provided at an included angle, a spacing distance between the central axis of the tube body 12 along the length direction of the tube body 12 and the central axis of the support member 13 along the length direction of the support member 13 is less than or equal to a preset spacing. The preset spacing may be 1 mm. It should be noted that when the central axis of the tube body 12 along the length direction of the tube body 12 and the central axis of the support member 13 along the length direction of the support member 13 are provided at an included angle, a connection line between any point on the central axis of the tube body 12 along the length direction of the tube body 12 and any point on the central axis of the support member 13 along the length direction of the support member 13 forms a spacing distance. Thus, a plurality of spacing distances are formed between the central axis of the tube body 12 along the length direction of the tube body 12 and the central axis of the support member 13 along the length direction of the support member 13, and the plurality of spacing distances are all less than or equal to 1 mm.

In this embodiment, the tube body 12 includes a pointed top structure 20 and a tube main body (not shown in the figure) that are axially connected. The diameter of the pointed top structure 20 gradually decreases in the direction away from the open end of the tube body 12. The closed end of the tube body 12 is located on the pointed top structure 20, and the open end of the tube body 12 is located at one end of the tube main body away from the pointed top structure 20. The heating element 11 has, in the axial direction of the heating element 11, a first end facing the pointed top structure 20 and a second end facing the open end.

As shown in FIG. 2 to FIG. 3, the first end of the heating element 11 may be provided as follows to ensure that the heating element 11 always has relatively good perpendicularity.

The first end of the heating element 11 is in contact and cooperates with the inner wall of the pointed top structure 20, and the part of the heating element 11 except the first end is spaced apart from the inner wall of the tube main body. Thus, for the heating element 11, the upper end of the heating element 11 obtains a support position through contact cooperation between the first end of the heating element 11 and the inner wall of the pointed top structure 20, and the lower end of the heating element 11 obtains a support position through the support member 13. Thus, the heating element 11 has better position stability, which is more conducive to always having relatively good perpendicularity.

In some embodiments, the heating element 11 has a spiral structure and includes a spiral segment and a top end 110 provided at one end of the spiral segment. The top end 110 is located within the pointed top structure 20 and is in contact and cooperates with the inner wall of the pointed top structure 20. The height of the top end 110 may be in a range of 0.8 mm to 2 mm, including 0.8 mm or 2 mm. The radial dimension thereof may be in a range of 0.5 mm to 2.0 mm, including 0.5 mm or 2.0 mm.

It should be noted that for the heating element 11, resistance values at two ends of the heating element 11 are relatively small. Thus, the temperature at two ends of the heating element 11 is lower than the temperature at the middle portion of the heating element 11 at the same spiral pitch. Thus, the top end 110 of the heating element 11 may be partially or entirely in contact with the inner wall of the pointed top structure 20. Thus, the adverse effect on the temperature difference around the heating structure 1 may be ignored or within a controllable range. According to different requirements for temperature field distribution in the entire heating process of the aerosol generating substrate and different burning states, if considered more strictly, a contact area between the top end 110 of the heating element 11 and the inner wall of the pointed top structure 20 should be as small as possible, or ideally be a point contact.

In some embodiments, the top end 110 of the heating element 11 is annular, and two opposite side surfaces of the annular top end 110 abut against the inner wall surface of the pointed top structure 20. Thus, while the first end of the heating element 11 may be stably supported and positioned, the contact area between the top end 110 of the heating element 11 and the pointed top structure 20 may be as small as possible; and/or, the top end 110 may further be sheet-shaped. Thus, the top end 110 has a relatively small thickness and a relatively low temperature. Consequently, the top end 110 has a relatively small effect on the surface temperature of the tube body 12 and the uniformity of overall heating of the aerosol generating substrate 4, or the effect may be ignored macroscopically. Similarly, if considered more strictly, the contact area between the sheet-shaped and/or annular top end and the inner wall of the tube body 12 should be as small as possible, or ideally be a point contact.

In some embodiments, the radial dimension of the top end 110 of the heating element 11 gradually decreases in the direction away from the open end of the tube body 12, and the top end 110 abuts against the uppermost portion of the pointed top structure 20. Thus, while the upper end of the heating element 11 is stably supported and positioned, the contact area between the top end 110 of the heating element 11 and the pointed top structure 20 may be as small as possible. Thus, the spiral segment close to the pointed top structure 20 may adapt to the conical shape of the pointed top structure 20 whose diameter gradually decreases, so as to more conveniently contact and cooperate with the inner wall of the pointed top structure 20.

In other embodiments, the first end of the heating element 11 may be spaced apart from the inner wall of the pointed top structure 20. The part of the heating element 11 except the first end is spaced apart from the inner wall of the tube main body. For the heating element 11, the lower end of the heating element 11 is supported and positioned by the support member 13, and the heating element 11 has particular stiffness, so that the entire heating element 11 may always have relatively good perpendicularity.

It should be noted that the temperature field distribution of the entire heating structure 1 is related to the density of the spiral segment. In general, the smaller the spiral pitch, the greater the amount of heat generated by the same length, the higher the temperature, and the stronger the infrared radiation. Therefore, in this embodiment, the spiral pitch of the spiral segment close to the pointed top structure 20 is greater than the spiral pitch of the spiral segment away from the pointed top structure 20. Thus, the temperature of the top end 110 may be suitably reduced, and the setting may further ensure that the adverse effect on the uniformity of overall heating of the aerosol generating substrate 4 is avoided.

As shown in FIG. 2 to FIG. 4, the second end of the heating element 11 may be provided as follows to ensure that the heating element 11 has relatively good perpendicularity.

The heating portion 21 includes a main body portion 213 and a first connection portion 211 and a second connection portion 212 that are connected to the main body portion 213. The first connection portion 211 and the second connection portion 212 are connected to one end of the main body portion 213 facing the open end of the tube body 12. The electrode portion 22 includes a first electrode 221 and a second electrode 222, and the first electrode 221 and the second electrode 222 are connected to the first connection portion 211 and the second connection portion 212, respectively. Specifically, the main body portion 213 may have a spiral structure, is longer than the first connection portion 211 or the second connection portion 212, and is a main heating portion. The first connection portion 211 is connected between the main body portion 213 and the first electrode 221, and the second connection portion 212 is connected between the main body portion 213 and the second electrode 222 so that the main body portion 213 has two connection points on the electrode portion 22. In addition, the electrode portion 22 is positioned on the support member 13, thereby ensuring that the heating portion 21 is stably and reliably positioned and supported through the support member 13 below the heating portion 21.

In some embodiments, the first connection portion 211 and the second connection portion 212 are provided on two sides of the central axis of the heating element 11 along the length direction of the heating element 11, respectively, and parts of the first connection portion 211 and the second connection portion 212 that face the electrode portion 22 are parallel to each other. That is, a segment at a connection between the first connection portion 211 and the first electrode 221 and a segment at a connection between the second connection portion 212 and the second electrode 222 are parallel to each other. Thus, it is further ensured that the lower end of the heating element 11 is stably and reliably positioned and supported so that the heating element 11 has relatively good perpendicularity.

In some embodiments, the width value of a gap w between opposite surfaces of the first connection portion 211 and the second connection portion 212 is 0.2 mm-1.5 mm. That is, the width value of the gap w between the opposite surfaces of the first connection portion 211 and the second connection portion 212 in parallel portions is 0.2 mm-1.5 mm. It should be noted that the width value of the gap w between the opposite surfaces of the first connection portion 211 and the second connection portion 212 may be 0.2 mm, 1.5 mm, or any value between 0.2 mm and 1.5 mm.

In some embodiments, the first connection portion 211 and the second connection portion 212 are provided on two sides of the central axis of the heating element 11 along the length direction of the heating element 11, respectively. At least one of the first connection portion 211 and the second connection portion 212 includes a bending portion away from the central axis of the heating element 11 along the length direction of the heating element 11. In this embodiment, the first connection portion 211 includes a bending portion away from the central axis of the heating element 11 along the length direction of the heating element 11. The second connection portion 212 further includes a bending portion away from the central axis of the heating element 11 along the length direction of the heating element 11. The arrangement of the bending portion may facilitate winding formation of the spiral segment. Certainly, in other embodiments, only the first connection portion 211 may include the bending portion away from the central axis of the heating element 11 along the length direction of the heating element 11, and the second connection portion 212 does not include the bending portion, but has a portion of another shape or is connected to the second electrode 222 in another manner. Similarly, only the second connection portion 212 may include the bending portion away from the central axis of the heating element 11 along the length direction of the heating element 11, and the first connection portion 211 does not include the bending portion, but has a portion of another shape or is connected to the first electrode 221 in another manner.

In some embodiments, the first connection portion 211 and the second connection portion 212 are provided on two sides of the axis of the heating element 11, respectively, and are symmetrically provided about the axis of the heating element 11. Thus, overall force bearing of the heating element 11 is more balanced, which is more conducive to the positioning and support of the heating element 11.

In some embodiments, the heating element 11 has a spiral structure. The main body portion 213 is a spiral segment, the first connection portion 211 and the second connection portion 212 are linear segments connected to one end of the spiral segment, and the linear segments are at least partially bent close to the spiral segment to form bending portions.

The heating portion 21 may have a single-spiral structure. Alternatively, the heating portion 21 may have a double-spiral structure. When the heating portion 21 has a single-spiral structure, as shown in FIG. 2 to FIG. 4, the heating portion 21 includes a straight segment and a spiral segment that extend along the axial direction of the tube body 12. The straight segment and the spiral segment are connected through the annular top end 110. The straight segment is parallel to the central axis of the tube body 12 along the length direction of the tube body 12. The spiral segment surrounds the outer periphery of the straight segment and extends along the axial direction of the straight segment to form a plurality of spiral segments successively connected. The spiral segment is wound around the outer periphery of the straight segment in multiple coils, and the straight segment is straightened to satisfy a specific straightness requirement, which is typically that the bending height over a length of 200 mm is less than 0.5 mm. During the winding process, two opposite ends of the straight segment are fixed by a clamp, and rotate simultaneously. In addition, during the rotation process, the tension is maintained on the straight segment, which is sufficient to ensure that the straightness of the straight segment will not be destroyed during the winding process. After the spiral segment is completely wound, a surface contour thereof may approximately form a virtual cylinder. During the winding process, the spiral segment is always adhered to the outer peripheral surface of the straight segment in a tightly wound manner to ensure that the virtual cylinder formed by the spiral segment is coaxial with the straight segment, that is, coaxial with the central axis of the tube body 12 along the length direction of the tube body 12. The first electrode 221 and the second electrode 222 are similarly straightened to satisfy the same straightness requirement as the straight segment of the heating portion 21, that is, the bending height over a length of 200 mm is less than 0.5 mm.

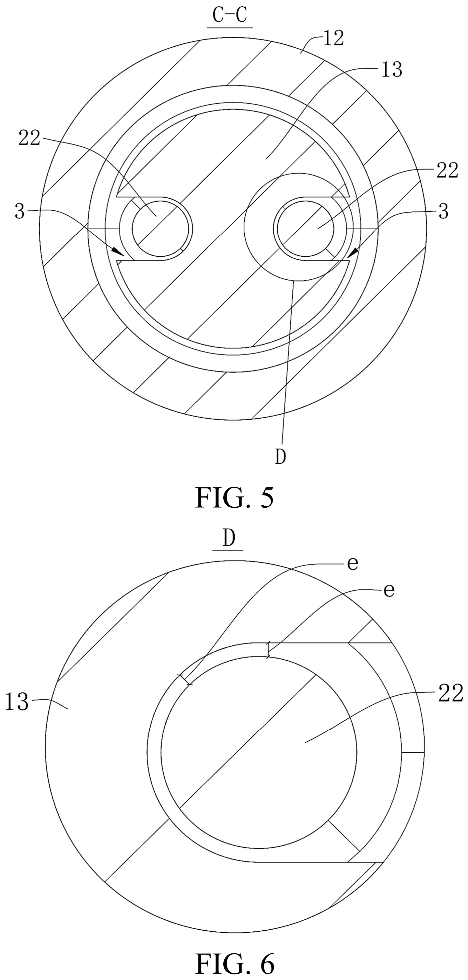

As shown in FIG. 2 to FIG. 6, in this embodiment, positioning grooves 3 are formed on the support member 13. The straight line segment of the electrode portion 22 is adapted to and fixed within the positioning grooves 3. Specifically, an outer peripheral surface of the support member 13 is recessed to form the positioning groove 3. The positioning grooves 3 are symmetrically distributed and are adapted to the symmetrically distributed first electrode 221 and second electrode 222, respectively. As shown in FIG. 5 to FIG. 6, a cross section of the positioning groove 3 in this embodiment is U-shaped. The cross section refers to an outline line of the positioning groove 3 distributed on a radial plane of the support member 13. The shape and dimension of the positioning groove 3 are provided corresponding to the outer peripheral shape and radial dimension of the electrode portion 22.

Further, as shown in FIG. 5 to FIG. 6, in a first embodiment, the width of a gap e formed between the positioning groove 3 and the straight line segment of the electrode portion adapted to the positioning groove 3 is less than 0.15 mm. Specifically, when the electrode portion is a cylinder and the positioning groove 3 is a U-shaped groove, width values of gaps formed between points on the outer peripheral surface of the electrode portion and the U-shaped positioning groove 3 are not exactly the same. Therefore, it may be understood that the width values of the gaps formed between points on the outer peripheral surface of the electrode portion and the U-shaped positioning groove 3 are all less than 0.15 mm.

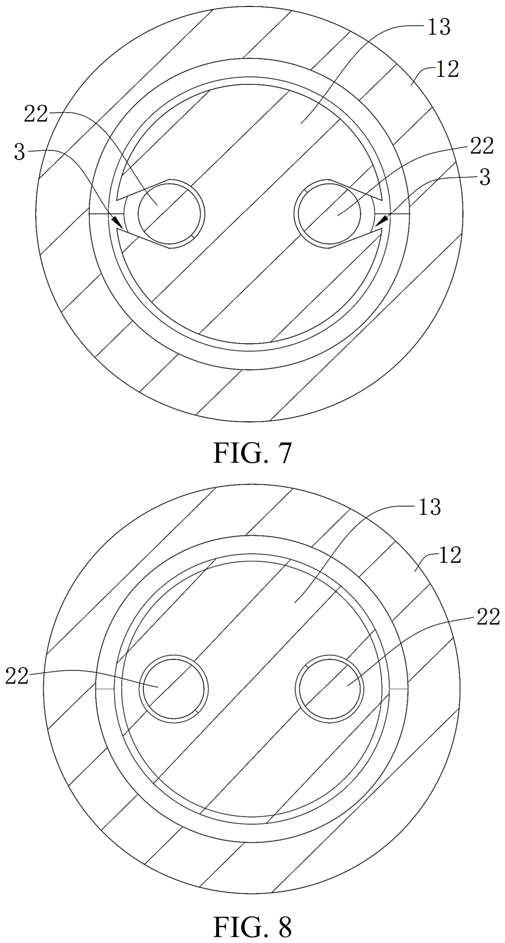

FIG. 7 is a schematic transverse cross-sectional view of one axial position of the heating structure 1 in a second embodiment of the present disclosure. In the second embodiment, a difference from the first embodiment lies in that, to improve the position stability of the electrode portion 22, the positioning groove 3 includes a U-shaped region and a gradient region that are connected. The shape and dimension of the U-shaped region correspond to the peripheral shape and radial dimension of the straight line segment of the electrode portion 22. The width of the gradient region gradually decreases in the direction away from the electrode portion 22, thereby further limiting the electrode portion 22. In this embodiment, the groove wall surface corresponding to the gradient region on the positioning groove 3 is a plane. In other embodiments, the groove wall surface corresponding to the gradient region on the positioning groove 3 may further be a cambered surface or may be in another form.

FIG. 8 is a schematic transverse cross-sectional view of one axial position of the heating structure 1 in a third embodiment of the present disclosure. In the third embodiment, a difference from the foregoing embodiments lies in that a cross section of the positioning groove 3 is circular. The cross section refers to an outline line of the positioning groove 3 distributed on a radial plane of the support member 13. In addition, in this embodiment, the positioning groove 3 is not formed by recessing the outer peripheral surface of the support member 13, but is formed by penetrating two opposite end surfaces of the support member 13 at a position that is not connected to the outer peripheral surface of the support member 13, thereby further limiting the electrode portion 22.

Other technical features not mentioned in the second embodiment may be provided with reference to the first embodiment, the third embodiment, or other embodiments mentioned above. Other technical features not mentioned in the third embodiment may be provided with reference to the first embodiment, the second embodiment, or other embodiments mentioned above.

In some embodiments, limiting portions are further provided between the support member 13 and the heating element 11. In the first embodiment, two limiting portions are provided, and the two limiting portions are connected between the first connection portion 211 and the support member 13, and between the second connection portion 212 and the support member 13, respectively. The limiting portion is configured to limit the lower end of the heating element 11 and the support member. The limiting portion may be adhered to the upper surface of the support member 13, may be snapped into the positioning groove 3, or may cover the top of the positioning groove 3.

In some embodiments, the limiting portion is a welding point formed between the heating element 11 and the electrode portion 22. Specifically, the first connection portion 211 and the second connection portion 212 are electrically connected to the electrode portion 22 and are integrally formed by welding. The welding points thus formed are the limiting portions. In addition, the two welding points are located at the same height, and a straight line formed by the two welding points is parallel to the radial direction of the support member 13. Certainly, in other embodiments, another intermediate structure may further be provided between the heating element 11 and the electrode portion 22 to serve as the limiting portion.

Further, in the first embodiment, as shown in FIG. 2, a positioning member 5 sleeves the outer periphery of the tube body 12. The positioning member 5 may have a flange structure. The positioning member 5 may not only provide limiting support for the tube body 12, but also facilitate the overall assembly and disassembly of the heating structure 1. For example, the heating structure 1 may be installed on the power supply assembly 2 through the positioning member 5. The tube body 12 may obtain limiting support through the positioning member 5 to prevent a position offset between the heating element 11 and the tube body 12 after being displaced, and ensure relatively good perpendicularity of the heating element 11, thereby ensuring that the temperature difference around the tube body 12 does not exceed a limit, and ensuring uniform heating of the aerosol generating substrate 4.

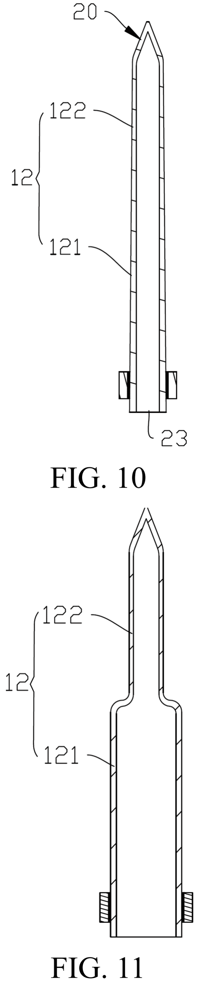

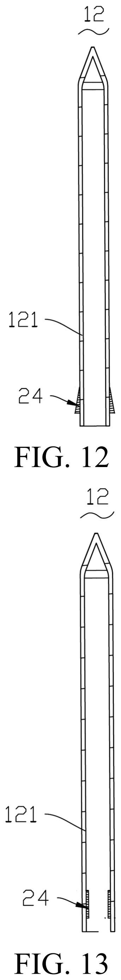

In some embodiments, the tube body 12 is provided with a reinforcing structure at least in a lower portion 121 close to the bottom end of the tube body 12. It may be understood that, during the insertion of the tube body 12 into the aerosol generating substrate 4, the lower portion 121 of the tube body 12 is easily broken. Therefore, in some embodiments, the strength at the position of the lower portion 121 of the tube body 12 is enhanced so that the tube body 12 is not easily broken, thereby improving the reliability of the tube body 12, ensuring the service life of the aerosol generating device, and improving the experience of the consumer. However, when the strength of the tube body 12 is improved, it is ensured that the transmittance of at least the upper portion of the tube body 12 for infrared light having a wave length of 2 µm-4.75 µm is greater than or equal to 35%. It may be understood that the transmittance of at least the upper portion of the tube body 12 for infrared light having a wave length of 2 µm, 4.75 µm, or any value between 2 µm and 4.75 µm is greater than or equal to 35%. Preferably, the light wave transmittance is greater than or equal to 50%, or greater than or equal to 70%. As shown in FIG. 10 and FIG. 12, in some embodiments, the tube body 12 is provided with a reinforcing structure at least at the lower portion 121. The strength of the lower portion 121 of the tube body 12 is enhanced so that the tube body 12 is not easily broken.

As shown in FIG. 10, in some embodiments, the tube wall thickness of the lower portion 121 of the tube body 12 may be greater than the tube wall thickness of the upper portion 122, to form a reinforcing structure. The tube wall thickness of the lower portion 121 of the tube body 12 is greater than the tube wall thickness of the upper portion 122 so that the outer diameter of the upper portion 122 is smaller than the outer diameter of the lower portion 121. As shown in FIG. 11, in some embodiments, the radial dimension of the lower portion 121 may be greater than the radial dimension of the upper portion 122, to form a reinforcing structure. The radial dimension of the lower portion 121 is greater than the radial dimension of the upper portion 122, that is, the outer diameter dimension of the lower portion 121 is greater than the outer diameter dimension of the upper portion 122. In this embodiment, the outer diameters of axial portions of the upper portion 122 may be the same, and the outer diameters of axial portions of the lower portion 121 may be the same. That is, the upper portion 122 and the lower portion 121 may each have a straight tube shape, and the cross section of the upper portion 122 and the cross section of the lower portion 121 may be provided in coaxial circular shapes. The outer diameter of the lower portion 121 may be approximately twice that of the upper portion 122. For example, the outer diameter of the lower portion 121 is twice that of the upper portion 122, or the outer diameter of the lower portion 121 is approximately twice that of the upper portion 122. Certainly, the outer diameter dimension relationship between the upper portion 122 and the lower portion 121 is not limited herein, as long as the outer diameter of the lower portion 121 is greater than the outer diameter of the upper portion 122 to enhance the strength of the lower portion 121. In some embodiments, the tube wall thickness of the lower portion 121 may be greater than the tube wall thickness of the upper portion 122 to doubly enhance the strength of the lower portion 121. The tube wall thicknesses of axial portions of the upper portion 122 may be the same, and the tube wall thicknesses of axial portions of the lower portion 121 may be the same. The tube wall thickness of the lower portion 121 may be slightly greater than the tube wall thickness of the upper portion 122, and the inner tube wall of the lower portion 121 may be farther from the central axis of the tube body 12 in the radial direction than the inner tube wall of the upper portion 122 so that a gap between the heating element 11 and the inner tube wall of the upper portion 122 is smaller than a gap between the heating element 11 and the inner tube wall of the lower portion 121.

In some embodiments, the tube wall thickness of the lower portion 121 may be equal to the tube wall thickness of the upper portion 122. That is, the inner tube wall of the lower portion 121 is farther from the central axis of the tube body 12 in the radial direction than the inner tube wall of the upper portion 122 so that the gap between the heating element and the inner tube wall of the upper portion 122 is smaller than the gap between the heating element and the inner tube wall of the lower portion 121. In other embodiments, the outer diameter dimension of the upper portion 122 may gradually increase from one end of the upper portion 122 connected to the pointed top structure 20 to the other end, and the outer diameter dimension of the lower portion 121 may gradually increase from one end close to the upper portion 122 to the open end 23. Alternatively, the outer diameter dimension of one of the upper portion 122 and the lower portion 121 gradually increases, and the tube wall thicknesses of axial portions of the other one are the same.

As shown in FIG. 12 and FIG. 13, in some embodiments, the reinforcing structure includes a reinforcing bar 24 provided on the inner tube wall and/or the outer tube wall of the lower portion 121. That is, the reinforcing structure is formed by providing the reinforcing bar 24 on the inner tube wall and/or the outer tube wall of the lower portion 121. The reinforcing bar 24 may be made of a material having flexible properties. For example, the reinforcing bar 24 may be made of silicone, thereby providing a buffering effect.

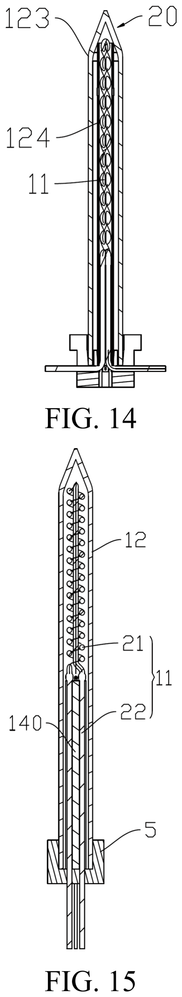

As shown in FIG. 14, in some embodiments, the tube body 12 includes an outer tube body 123 and an inner tube body 124, and the inner tube body 124 is provided inside the outer tube body 123. The heating element 11 is provided inside the inner tube body 124. The inner tube body 124 is at least partially spaced apart from the outer tube body 123. Preferably, a gap between the inner tube body 124 and the outer tube body 123 is uniform. The tube walls of the outer tube body 123 and the inner tube body 124 allow the infrared light to penetrate through, thereby facilitating the radiation of the infrared light from the heating element 11 to heat the aerosol generating substrate 4. By providing the inner tube body 124 spaced apart from the outer tube body 123, the heat of the heating element 11 is radiated through the inner tube body 124 so that the heat reaching each part of the outer tube body 123 is relatively uniform, thereby achieving uniform heating of the aerosol generating substrate 4, and improving the vaping experience of the consumer.

In some embodiments, the outer tube body 123 is in the shape of a hollow tube and has two ends distributed along the axial direction. Specifically, the outer tube body 123 includes a tubular body having a circular cross section and a pointed top structure 20 provided at one end of the tubular body. In other embodiments, the cross section of the tubular body is not limited to a circular shape. The inner tube body 124 is in the shape of a hollow tube and has two ends distributed along the axial direction. Specifically, the inner tube body 124 includes a tubular body having a circular cross section. In other embodiments, the cross section of the tubular body is not limited to a circular shape. The tubular body has a hollow structure with openings at two ends. The heating element 11 is provided inside the inner tube body 124, and one end of the inner tube body 124 abuts against the pointed top structure 20 so that the inner tube body 124 and the heating element 11 are fixed at specified positions.

In some embodiments, the tube wall of the inner tube body 124 is spaced apart from the entire heating element 11. For example, a gap is reserved between the inner tube body 124 and the heating element 11. The gap may be filled with air. In other embodiments, the gap may further be filled with a rare gas or an inert gas. The gap is reserved so that there is no direct contact between the inner tube body 124 and the heating element 11. In some embodiments, the heating element 11 may further be partially spaced apart from the tube wall of the inner tube body 124. Specifically, the radial dimension of a partial segment of the heating element 11 may be greater than the radial dimension of another partial segment, and the radial dimension of a partial segment of the heating element 11 may be equal to the inner diameter of the inner tube body 124, thereby achieving a limiting function. In some embodiments, the inner side of the inner tube body 124 may partially protrude toward the heating element 11 to contact the heating element 11, thereby achieving a limiting function. In other embodiments, an isolating and positioning structure may be provided on the heating element 11 or the tube wall of the inner tube body 124 so that the heating element 11 is not in direct contact with the tube wall of the inner tube body 124. For example, a ceramic ring or the like sleeves a partial segment of the heating element 11. It should be noted that the foregoing gap may refer to a gap accessible to air, and does not mean that air or another gas necessarily exists. A vacuum state is also a form of the gap. To obtain a better vaping experience and prolong the service life of the heating element 11, the inner tube body 124 may further be provided with vacuum or by sealing the open end.

The temperature at which the entire heating structure heats the aerosol generating substrate 4 may be further configured by configuring the tube wall thickness and the spacing between the inner tube body 124 and the outer tube body 123. Under the same temperature, as the tube wall thickness increases, the overall irradiance may tend to decrease. Optionally, in some embodiments, the tube wall thickness of the outer tube body 123 is 0.15 mm-0.6 mm, including 0.15 mm and 0.6 mm. In some embodiments, as the spacing between the heating element 11 and the tube wall increases, the temperature of the heating structure may tend to gradually decrease. Preferably, in some embodiments, the spacing between the tube wall of the outer tube body 123 and the inner tube body 124 may be 0.05 mm-1 mm, including 0.05 mm and 1 mm.

As shown in FIG. 15, in some embodiments, the heating structure further includes a TCR temperature measuring element 140. The TCR temperature measuring element 140 is provided in the tube body 12, spaced apart from the heating element 11, and configured to measure the temperature of the heating structure.

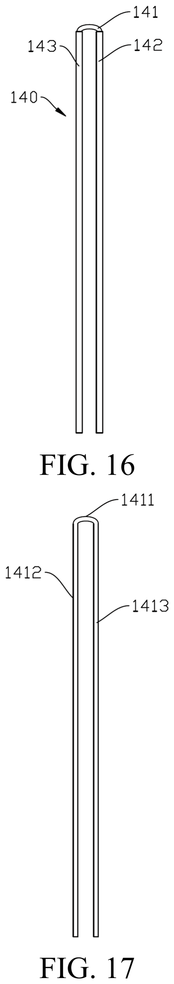

As shown in FIG. 15 and FIG. 16, in some embodiments, the TCR temperature measuring element 140 includes a temperature measuring portion 141 having a high TCR value, a third lead 142, and a fourth lead 143. The third lead 142 and the fourth lead 143 are electrically connected to two ends of the temperature measuring portion 141, respectively, and extend out of the tube body 12 from the positioning member 5 to form an overall n-shaped TCR temperature measuring element 140, which is configured to connect to an external circuit and detect the temperature of the heating structure. In some embodiments, the material of the temperature measuring portion 141 may be a platinum wire or the like. In the TCR temperature measuring element 140 with such a TCR value setting, since the temperature measuring portion 141 is horizontally provided at the foregoing position and is in a uniform temperature field, and the third lead 142 and the fourth lead 143 are connected to the external circuit, corresponding temperatures at different moments may be calculated through corresponding algorithms. Compared with another arrangement manner, the measured temperature is more accurate. The TCR temperature measuring element 140 is placed inside the tube body 12 along the axial direction of the tube body 12 and spaced apart from the heating element 11. In some embodiments, the TCR temperature measuring element 140 is placed at a position of the electrode portion 22 in the tube body 12. Specifically, the temperature measuring portion 141 is provided at a connection portion of the heating portion 21 and the electrode portion 22 in the tube body 12, or is slightly lower than the connection portion.

As shown in FIG. 17, in other embodiments, the TCR temperature measuring element 140 may not be provided with the third lead 142 and the fourth lead 143. That is, the temperature measuring portion 141 having a high TCR value is entirely strip-shaped, bent into a vertical n-type, and provided inside the tube body 12, and spaced apart from the heating element 11 and the tube body 12. The temperature measuring portion 141 is bent to form a first temperature measuring portion 1411, a second temperature measuring portion 1412, and a third temperature measuring portion 1413. The first temperature measuring portion 1411 is transversely provided at the connection portion of the heating portion 21 and the electrode portion 22, or is slightly lower than the connection portion. The second temperature measuring portion 1412 and the third temperature measuring portion 1413 are connected to two ends of the first temperature measuring portion 1411, respectively, and extend out of the tube body 12 from the positioning member 5. The TCR temperature measuring element 140 in this setting may calculate the average value of the entire TCR temperature measuring element 140 through another corresponding algorithm to obtain a corresponding temperature. In some embodiments, a cross section of the temperature measuring portion 141 may be circular, that is, the TCR temperature measuring element 140 may be a TCR resistor wire. In other embodiments, the TCR temperature measuring element 140 may further be sheet-shaped. That is, the TCR temperature measuring element 140 may be a TCR resistor sheet. The TCR temperature measuring element 140 with such a TCR value setting is a resistor wire with a high TCR, which is convenient to manufacture and more suitable for batch production.

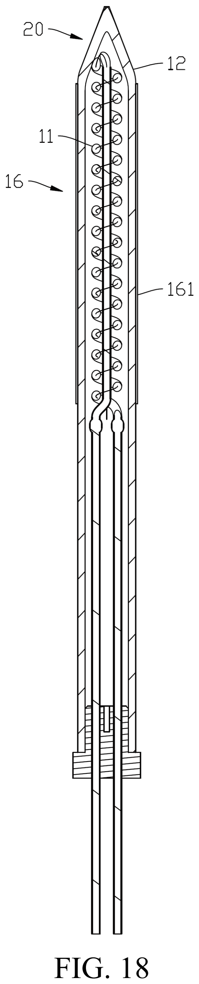

As shown in FIG. 18, in some embodiments, the tube body 12 includes a wall surface that allows the infrared light to penetrate through and is in contact with an aerosol generating substrate 4. The tube body 12 further includes a protrusion structure 161. The protrusion structure 161 is provided on at least a part of the wall surface of the tube body 12 and is configured to reduce a contact area between the wall surface and the aerosol generating substrate 4, so as to facilitate cleaning, prolong the service life of the heating structure, reduce residual stains generated by the aerosol generating substrate 4 from remaining in contact with the surface of the tube body 12 during the vaping process, and further reduce the loss of infrared light energy. The protrusion structure 161 has infrared light-transmitting characteristics. In this embodiment, the tube body 12 is divided into an insertion segment 16 and a non-insertion segment. During use, after the tube body 12 is inserted into the aerosol generating substrate 4, a part of the tube body 12 that is located within the aerosol generating substrate 4 is the insertion segment 16, and a part of the tube body 12 that is not inserted into the aerosol generating substrate 4 is the non-insertion segment. In this embodiment, the insertion segment 16 may include a pointed top structure 20 and a part of the tubular body. In some embodiments, the insertion segment 16 is located within the coverage range of the aerosol generating substrate 4. A length range covering the tube body 12 is 2-12 mm. Specifically, the protrusion structure 161 is provided on the wall surface of the insertion segment 16 in contact with the aerosol generating substrate 4. In other embodiments, when the heating element 11 is spaced apart from the outer periphery of the tube body 12, the aerosol generating substrate 4 is accommodated in an accommodating cavity inside the tube body 12. In this case, the protrusion structure 161 is correspondingly provided on the inner wall surface of the tube body 12.

Specifically, the protrusion structure 161 may be provided in a strip shape or a grid shape. When the protrusion structure 161 has a strip shape, the protrusion structure 161 may be provided in a longitudinal strip shape, an annular strip shape, a spiral strip shape, or the like. When the protrusion structure 161 has a grid shape, the protrusion structure 161 may be provided in a square grid shape, a rhombus grid shape, a circular grid shape, a polygonal grid shape, an irregular grid shape, or the like. When the protrusion structure 161 is provided in a strip shape, the width thereof is 0.2-3 mm, and the thickness thereof is 0.05-0.3 mm. When the protrusion structure 161 is provided in a grid shape, the width thereof is 0.2-3 mm, and the thickness thereof is 0.05-0.3 mm. The protrusion structure 161 is provided so that the contact area between the heating structure and the aerosol generating substrate 4 may be reduced, thereby reducing the adhesion degree. In addition, if the protrusion structure 161 is provided with such a width and thickness range, the balance between the arrangement area of the protrusion structure 161 and a non-arrangement area may be achieved, which does not cause massive accumulation of oil in a concave portion in which the protrusion structure 161 is not provided, and can achieve an effect that both the portion in which the protrusion structure 161 is located and the concave portion in which the protrusion structure 161 is not provided may be cleaned thoroughly through slight cleaning.

Specifically, when the protrusion structure 161 is provided in the longitudinal strip shape, the protrusion structure 161 may include a plurality of longitudinal protruding ribs. The longitudinal protruding ribs extend along the length direction of the tube body 12 and are arranged at intervals in the peripheral direction of the tube body 12. Specifically, the longitudinal protruding rib may have an extension direction parallel to the central axis direction of the tube body 12, and is vertically provided along the wall surface of the tube body 12. Alternatively, the extension direction may not be parallel to the central axis direction, and the longitudinal protruding rib is obliquely provided along the wall surface of the tube body 12. The longitudinal protruding ribs may be arranged at uniform intervals in the peripheral direction of the tube body 12, or may be unevenly arranged in the peripheral direction of the tube body 12.

When the protrusion structure 161 is provided in the annular strip shape, the protrusion structure 161 may include a plurality of annular protruding ribs. The plurality of annular protruding ribs are distributed at intervals in the longitudinal direction of the tube body 12. Specifically, the annular protruding rib may be perpendicular to the central axis of the tube body 12, and is arranged along the peripheral direction of the tube body 12. Alternatively, the annular protruding rib may not be perpendicular to the central axis of the tube body 12, and is arranged obliquely upward or downward along the peripheral direction of the tube body 12. The annular protruding ribs may be arranged at uniform intervals in the longitudinal direction of the tube body 12, or may be unevenly arranged.

When the protrusion structure 161 is provided in the spiral strip shape, the protrusion structure 161 may include one spiral protruding rib, which spirally surrounds from the top end of the insertion segment 16 to the bottom end of the insertion segment 16. Alternatively, the protrusion structure 161 may include a plurality of spiral protruding ribs, which are intermittently connected from front to rear one by one to cover the entire insertion segment 16. When the protrusion structure 161 includes a plurality of spiral protruding ribs, the spiral protruding ribs may be arranged at uniform intervals on the tube body, or may be unevenly arranged.

Specifically, when the protrusion structure 161 is provided in the grid shape, the dimension of the unit grid of the protrusion structure 161 is 0.2-3 mm. The protrusion structure 161 includes a plurality of longitudinal protruding ribs and a plurality of annular protruding ribs. The plurality of longitudinal protruding ribs extend along the length direction of the tube body 12 and are arranged at intervals in the peripheral direction of the tube body 12. The plurality of annular protruding ribs are distributed at intervals in the longitudinal direction of the tube body 12 and are connected to the plurality of longitudinal protruding ribs, respectively. It may be understood that, when the protrusion structure 161 is provided in the grid shape, the plurality of longitudinal protruding ribs and the plurality of annular protruding ribs may be arranged at uniform intervals, or may be unevenly arranged, as long as the dimension of the unit grid of the protrusion structure 161 is within 0.2-3 mm.

Optionally, when the protrusion structure 161 has a grid shape, the grid shape thereof may be a circular shape, a polygonal shape, an irregular shape, or the like when the dimension of the unit grid is within 0.2-3 mm. The foregoing structures are all applicable to heating structures of central and peripheral heating manners.

In some embodiments, the protrusion structure 161 is a structural glass that transmits the infrared light, and the material composition is at least one of SiO2, Li2O, K2O, Al2O3, MgO, TiO2, P2O5, and ZrO2. The infrared light transmittance of the protrusion structure 161 in the band of 2-4.75 µm is greater than or equal to 50%, and preferably is greater than 70%. The protrusion structure 161 formed by selecting and combining the foregoing materials may enable the infrared light to have relatively large transmittance so that the radiation energy of the infrared light is optimized and regulated, and the energy loss of the infrared light in the radiation process is reduced. Optionally, in some embodiments, the material of the protrusion structure 161 may further be set to be the same as that of the tube body 12, and the protrusion structure 161 may be integrally formed with the tube body 12. By designing the protrusion structure 161 of such a special material and structure, optimization and regulation of the infrared radiation light wave energy may be further optimized, thereby improving the consistency of the vaping experience.

In the preparation process, the protrusion structure 161 is formed using a cast film strip through laser engraving or die cutting. Finally, after high-temperature processing is performed at 600°C-1000°C, the wall surface of the tube body 12 and the protrusion structure 161 are integrated to form an infrared radiation window portion of a grid or strip structure. In this way, the infrared radiation energy may be optimized and regulated through the protrusion structure 161, thereby reducing the energy loss of the infrared light. Meanwhile, the contact area between the aerosol generating substrate 4 and the window portion may further be reduced, thereby reducing the adhesion degree between the aerosol generating substrate 4 and the wall of the tube body, and greatly reducing the stain residue and cleaning difficulty. In addition, the production processing manner is highly operable and convenient for batch production and manufacturing.

In some embodiments, when the material of the protrusion structure 161 is the same as that of the window portion, the thickness of the window portion may be appropriately increased. A groove of a particular shape is arranged on the insertion segment 16 of the window portion through a corresponding process. A protruding rib is formed corresponding to a portion that is not provided with the groove. In this way, the contact area with the aerosol generating substrate may be reduced.

It should be noted that the above protrusion structure 161 may alternatively be a protruding point structure, or a strip-shaped protrusion provided in any other direction. Details are not described herein again.

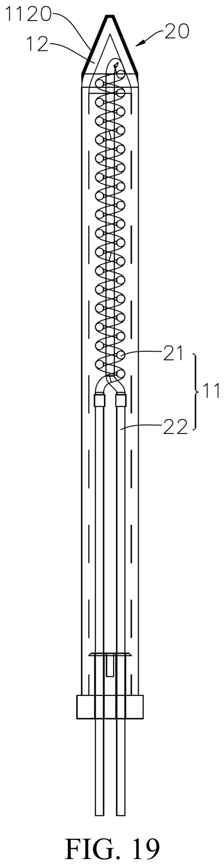

As shown in FIG. 19 to FIG. 20, in some embodiments, the tube body 12 includes an open end and a closed end opposite to the open end. The heating portion 21 of the heating element 11 extends into the tube body 12 via the open end, and a reflective structure configured to reflect the infrared light is formed on the closed end. By forming the reflective structure configured to reflect the infrared light on the closed end, the heating structure causes the entire temperature field of the heating element 11 to move downward, thereby avoiding the problem of poor vaping experience of the product caused by charring of the aerosol generating substrate 4 due to overheating of the closed end. In addition, the reflective structure may reflect the infrared radiation to the middle position of the tube body 12 to reheat the heating element 11, thereby improving the utilization efficiency of heat.

As shown in FIG. 19, in some embodiments, a reflective structure configured to reflect the infrared light is formed on the pointed top structure 20. The reflective structure includes a reflective coating 1120 coated on the outer surface of the pointed top structure 20. The reflective coating 1120 can reflect the infrared radiation heat from the pointed top structure 20 to the heating portion 21, thereby reducing the temperature of the pointed top structure 20, and avoiding that after the pointed top structure 20 is inserted into the aerosol generating substrate 4, excessive heat is transferred from the pointed top structure 20 to the aerosol generating substrate 4 to cause overheating to produce an unpleasant smell and affect the taste. Meanwhile, the reflective coating 1120 reflects the infrared radiation on the pointed top structure 20 to the middle position of the heating portion 21 to reheat the heating portion 21, thereby improving the utilization efficiency of heat. The material of the reflective coating 1120 includes a high-temperature-resistant metal material such as platinum, gold, silver, and a ceramic layer, a non-metal material, and other materials that totally reflect the infrared light. The thickness of the reflective coating 1120 is 50 nm-150 µm. The thickness range includes 50 nm, 150 µm, and any value between 50 nm and 150 µm. The reflectivity of the reflective structure for the infrared light having a wave length of 2-4.75 µm is greater than or equal to 35%, and preferably is greater than or equal to 50%, which can improve the utilization efficiency of heat. The band of the infrared light includes 2 µm, 4.75 µm, and any band between 2 µm and 4.75 µm.

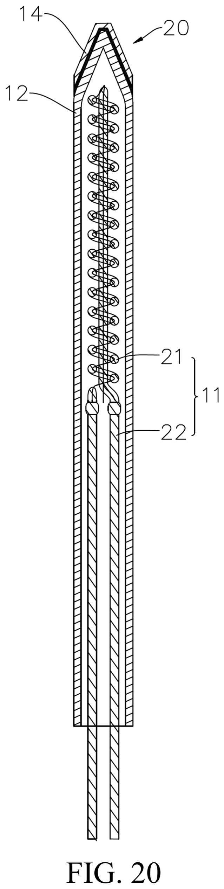

As shown in FIG. 20, in other embodiments, the reflective structure includes an independently formed reflector 14. The shape of the reflector 14 corresponds to the shape of the pointed top structure 20, both of which are inverted "V" shapes. A side of the reflector 14 facing the pointed top structure 20 is coated with a reflective coating 1120. The reflector 14 is fixed to the pointed top structure 20 by bonding, mechanical combination, or other manners.

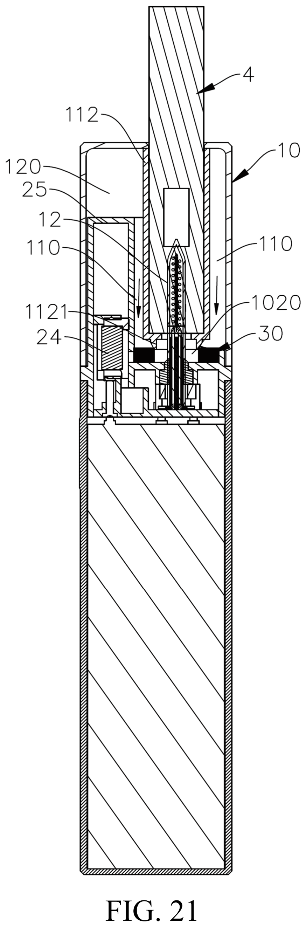

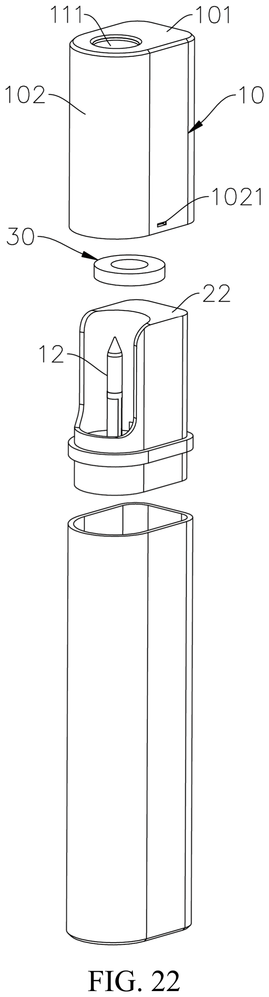

As shown in FIG. 21 and FIG. 22, in some embodiments, the aerosol generating device further includes an extractor 10 and a filtering structure 30. In some embodiments, the extractor 10 may include a second top wall 101 and a cylindrical second side wall 102 connected to the second top wall 101. The second top wall 101 is arranged with an insertion port 111. The insertion port 111 extends inwards to form an accommodating tube 112 connected to the second top wall 101. The accommodating tube 112 is configured to accommodate at least a part of the aerosol generating substrate 4. The accommodating tube 112 may have a tubular structure that penetrates two ends. The insertion port 111 is configured to insert the aerosol generating substrate 4 into the accommodating tube 112. One end of the accommodating tube 112 away from the insertion port 111 has an air inlet end 1121. The inner diameter of the air inlet end 1121 is less than the inner diameter of the insertion port 111 and the outer diameter of the aerosol generating substrate 4, for fixing the aerosol generating substrate 4 in the accommodating tube 112 to prevent the aerosol generating substrate 4 from falling off. The second side wall 102 is arranged with an air inlet hole 1021 communicated with the accommodating tube 112. The air inlet hole 1021 is communicated with external air and configured for air intake.

The heating structure is detachably connected to the extractor 10, and defines, together with the extractor 10, an air inlet channel 110 communicated with the accommodating tube 112. The filtering structure 30 is detachably provided in the air inlet channel 110 and cooperates with the air inlet end 1121 to filter airflow passing between the air inlet channel 110 and the accommodating tube 112. The filtering structure 30 is configured to filter the aerosol flowing through the filtering structure 30 into the extractor 10, preventing the aerosol from diffusing and depositing in the gaps of the connections between various components, thereby facilitating cleaning and improving the vaping experience. Specifically, the cylindrical second side wall 102 forms an empty cavity 120 communicated with the air inlet hole 1021, and the empty cavity 120 and the outer wall of the accommodating tube 112 form the air inlet channel 110 communicated with the accommodating tube 112. It may be understood that, in other embodiments, the air inlet channel 110 may be correspondingly arranged according to the actual situation.

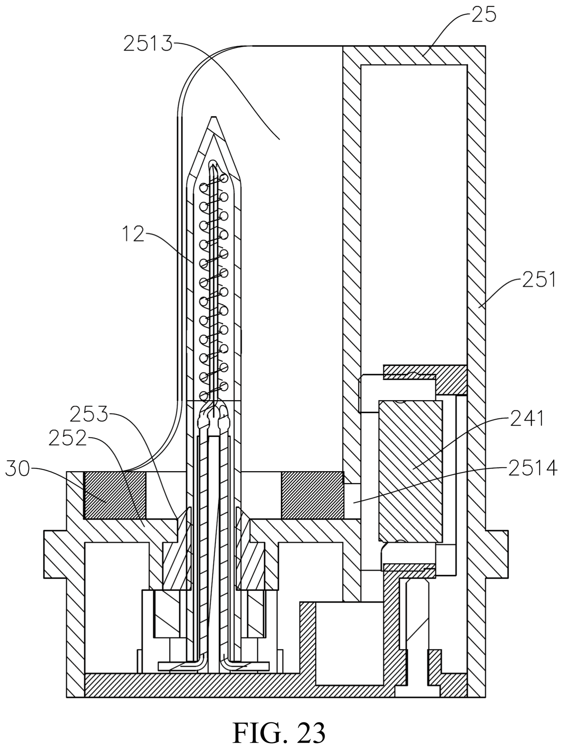

Referring to FIG. 21 to FIG. 23 together, in some embodiments, the aerosol generating device further includes a bracket 25. The bracket 25 is configured to install and fix the heating structure and the filtering structure 30, and functions to support the heating structure and the filtering structure 30. An airflow sensing device 241 is installed in the bracket 25 and communicated with the accommodating tube 112. During vaping, a negative pressure is formed in the cavity so that the airflow sensing device 241 responds and makes a response instruction. In some embodiments, the bracket 25 may include a first sleeve 251, a support wall 252, and a second sleeve 253. The first sleeve 251 semi-surrounds the heating structure, and a first side wall of the first sleeve 251 close to the heating structure is vertically connected to the support wall 252. The second sleeve 253 is connected to the first sleeve 251 and the support wall 252. The first sleeve 251 is further arranged with a notch 2513. The notch 2513 is L-shaped and may extend the support wall 252 from the first top wall of the first sleeve 251. The notch 2513 is convenient for the user to access the filtering structure 30 and to locally clean the heating structure. A vent hole 2514 that communicates the airflow sensing device 241 and the accommodating tube 112 is arranged at the first side wall close to the support wall 252. Meanwhile, the filtering structure 30 provided on the support wall 252 blocks the vent hole 2514 to filter air that enters the airflow sensing device 241 through the vent hole 2514, so as to protect the airflow sensing device 241, thereby improving the accuracy of detecting the vaping state by the airflow sensing device 241.

In some embodiments, the filtering structure 30 may be annular. The inner diameter of the filtering structure 30 is greater than the diameter of the root of the heating structure. In addition, the inner diameter of the filtering structure 30 is adapted to the outer diameter of the air inlet end 1121 to form a buffer cavity 1020 communicated with the accommodating tube 112. The buffer cavity 1020 can prevent the lower end of the accommodating tube 112 from excessively pressing the filtering structure 30, thereby preventing excessive pressure on the filtering structure 30 to decrease the porosity of the filtering structure 30 and consequently increase the resistance to airflow. The filtering structure 30 includes filter cotton. It may be understood that, in other embodiments, the filtering structure 30 may alternatively have other shapes such as a semi-circle and a square. The inner diameter of the filtering structure 30 may further be equal to the diameter of the root of the heating structure. The filtering structure 30 may further include a porous filtering structure such as a filter fiber.

It may be understood that, the foregoing embodiments only describe preferred implementations of the present disclosure specifically and in detail, but cannot be construed as a limitation to the patent scope of the present disclosure. It should be pointed out that for a person skilled in the art, without departing from the concept of the present disclosure, the foregoing technical features may be freely combined, and several modifications and improvements can be made, which all fall within the protection scope of the present disclosure. Therefore, all equivalent changes and modifications made to the scope of the claims of the present disclosure should fall within the scope of the claims of the present disclosure.

## Claims

1. A heating structure, comprising a heating element (11) that generates infrared light in a power-on state, and a tube body (12) that allows the infrared light to penetrate through,
wherein the heating element (11) is at least partially accommodated in the tube body (12), and a gap is at least partially formed between the heating element (11) and the inner wall of the tube body (12); an included angle (a) formed between the central axis of the heating element (11) along the length direction of the heating element (11) and the central axis of the tube body (12) along the length direction of the tube body (12) is less than or equal to 5°.

2. The heating structure of claim 1, wherein a distance between the central axis of the heating element (11) along the length direction of the heating element (11) and the central axis of the tube body (12) along the length direction of the tube body (12) is less than or equal to 0.5 mm.

3. The heating structure of claim 1 or 2, wherein the heating structure further comprises a support member (13); the support member (13) is at least partially located within the tube body (12);
the heating element (11) comprises a heating portion (21) and an electrode portion (22);
the tube body (12) comprises a closed end and an open end; one end of the electrode portion (22) is connected to the heating portion (21), and the other end of the electrode portion (22) extends out from the open end; and
the electrode portion (22) is at least partially located within the tube body (12) and is positioned on the support member (13), and the support member (13) is radially and/or axially limited by the tube body (12).

4. The heating structure of claim 3, wherein the tube body (12) and the support member (13) are coaxially provided, or a spacing distance between the central axis of the tube body (12) along the length direction of the tube body (12) and the central axis of the support member (13) along the length direction of the support member (13) is less than or equal to a preset spacing.

5. The heating structure of claim 3, wherein the tube body (12) comprises a pointed top structure (20) and a tube main body that are axially connected; the pointed top structure (20) forms the closed end, and the open end of the tube body (12) is located at one end of the tube main body away from the pointed top structure (20); and
the heating element (11) has, in the axial direction of the heating element (11), a first end facing the pointed top structure (20) and a second end facing the open end; the first end is in contact and cooperates with the inner wall of the pointed top structure (20), and the part of the heating element (11) except the first end is spaced apart from the inner wall of the tube main body.

6. The heating structure of claim 5, wherein the heating element (11) has a spiral structure and comprises a spiral segment and a top end (110) provided at one end of the spiral segment; and the top end (110) is located within the pointed top structure (20) and is in contact and cooperates with the inner wall of the pointed top structure (20).

7. The heating structure of claim 6, wherein the top end (110) of the heating element (11) is annular, and two opposite side surfaces of the annular top end (110) abut against the inner wall surface of the pointed top structure (20).

8. The heating structure of claim 6, wherein the radial dimension of the top end (110) of the heating element (11) gradually decreases in the direction away from the open end of the tube body (12), and the top end (110) abuts against the uppermost portion of the pointed top structure (20).

9. The heating structure of claim 3, wherein the tube body (12) comprises a pointed top structure (20) and a tube main body that are axially connected; the pointed top structure (20) forms the closed end, and the open end of the tube body (12) is located at one end of the tube main body away from the pointed top structure (20); and
the heating element (11) has, in the axial direction of the heating element (11), a first end facing the pointed top structure (20) and a second end facing the open end; the first end is spaced apart from the inner wall of the pointed top structure (20), and the heating element (11) is spaced apart from the inner wall of the tube main body.

10. The heating structure of any one of claims 4 to 9, wherein the heating portion (21) comprises a main body portion (213) and a first connection portion (211) and a second connection portion (212) that are connected to the main body portion (213); the first connection portion (211) and the second connection portion (212) are connected to one end of the main body portion (213) facing the open end; and
the electrode portion (22) comprises a first electrode (221) and a second electrode (222), and the first electrode (221) and the second electrode (222) are connected to the first connection portion (211) and the second connection portion (212), respectively.

11. The heating structure of claim 10, wherein the first connection portion (211) and the second connection portion (212) are provided on two sides of the central axis of the heating element (11) along the length direction of the heating element (11), respectively, and parts of the first connection portion (211) and the second connection portion (212) that face the electrode portion (22) are parallel to each other.

12. The heating structure of claim 11, wherein the width value of a gap (w) between opposite surfaces of the first connection portion (211) and the second connection portion (212) is 0.2 mm-1.5 mm.

13. The heating structure of claim 10, wherein the first connection portion (211) and the second connection portion (212) are provided on two sides of the central axis of the heating element (11) along the length direction of the heating element (11), respectively; and at least one of the first connection portion (211) and the second connection portion (212) comprises a bending portion away from the central axis of the heating element (11) along the length direction of the heating element (11).

14. The heating structure of claim 10, wherein the first connection portion (211) and the second connection portion (212) are provided on two sides of the axis of the heating element (11), respectively, and are symmetrically provided about the central axis of the heating element (11) along the length direction of the heating element (11).

15. The heating structure of claim 10, wherein the main body portion (213) is a spiral segment, the first connection portion (211) and the second connection portion (212) are linear segments connected to one end of the spiral segment, and the linear segments are at least partially bent close to the spiral segment.

16. The heating structure of claim 1 or 2, wherein the heating element (11) comprises a heating portion (21) and an electrode portion (22) that are connected; the heating portion (21) comprises a heating base (214) and an infrared radiation layer (215) covering the heating base (214).

17. The heating structure of claim 1 or 2, wherein the included angle formed between the central axis of the heating element (11) along the length direction of the heating element (11) and the central axis of the tube body (12) along the length direction of the tube body (12) is less than or equal to 2°.

18. The heating structure of claim 3, wherein positioning grooves (3) are formed on the support member (13); the electrode portion (22) is adapted to and fixed within the positioning grooves (3).

19. The heating structure of claim 18, wherein limiting portions are further provided between the support member (13) and the heating element (11); the limiting portion is adhered to the upper surface of the support member (13), is snapped into the positioning groove (3), or covers the top of the positioning groove (3).

20. The heating structure of claim 19, wherein the limiting portion is a welding point formed between the heating element (11) and the electrode portion (22).

21. The heating structure of claim 1, wherein the tube body (12) is provided with a reinforcing structure at least in a lower portion (121) close to the bottom end of the tube body (12).

22. The heating structure of claim 1, wherein the tube body (12) comprises an outer tube body (123) and an inner tube body (124), and the inner tube body (124) is provided inside the outer tube body (123); the heating element (11) is provided inside the inner tube body (124).

23. The heating structure of claim 1, further comprising a temperature resistance coefficient (TCR) temperature measuring element (140), wherein the TCR temperature measuring element (140) is provided in the tube body (12) and spaced apart from the heating element (11).

24. The heating structure of claim 1, wherein the tube body (12) comprises a wall surface that allows the infrared light to penetrate through and is in contact with an aerosol generating substrate (4); the tube body (12) further comprises a protrusion structure (161); the protrusion structure (161) is provided on at least a part of the wall surface of the tube body (12) and is configured to reduce a contact area between the wall surface and the aerosol generating substrate (4); the protrusion structure (161) has infrared light-transmitting characteristics.

25. The heating structure of claim 1, wherein the tube body (12) comprises an open end and a closed end opposite to the open end; the heating element (11) extends into the tube body (12) via the open end, and a reflective structure configured to reflect the infrared light is formed on the closed end.

26. A heating structure, comprising a heating element (11) that generates infrared light in a power-on state, and a tube body (12) that allows the infrared light to penetrate through,
wherein the heating element (11) is at least partially accommodated in the tube body (12), and a gap is at least partially formed between the heating element (11) and the inner wall of the tube body (12); a distance between the central axis of the heating element (11) along the length direction of the heating element (11) and the central axis of the tube body (12) along the length direction of the tube body (12) is less than or equal to 0.5 mm.

27. An aerosol generating device, comprising the heating structure of any one of claims 1 to 26.

28. The aerosol generating device of claim 27, further comprising an extractor (10) and a filtering structure (30),
wherein the extractor (10) comprises an accommodating tube (112) configured to accommodate at least a part of an aerosol generating substrate (4), and the accommodating tube (112) has an insertion port (111) configured to insert the aerosol generating substrate (4) and an air inlet end (1121) opposite to the insertion port (111); the heating structure is detachably connected to the extractor (10) and defines, together with the extractor (10), an air inlet channel (110) communicated with the accommodating tube (112); the filtering structure (30) is detachably provided in the air inlet channel (110) and cooperates with the air inlet end (1121) to filter airflow passing between the air inlet channel (110) and the accommodating tube (112).
